# EUROPEAN PATENT APPLICATION

(11) **EP 4 715 979 A1**
(43) Date of publication of application: **25.03.2026**
(21) Application number: 24383007.2
(22) Date of filing: 20.09.2024
(51) Int. Cl.: H01M 50/207, H01M 50/247, H01M 50/258, H01M 50/264

(54) **CASE FOR BATTERIES**

(71) Applicant: CACHARRICOS, S.L., 08029 Barcelona (ES)
(72) Inventor: VERGAS HERNÁNDEZ, Leonardo Dolgan, 08029 Barcelona (ES)
(74) Representative: Herrero & Asociados, S.L.

(57) **Abstract**

The case (1) for batteries comprises a plurality of housings (2) for said batteries; a closed base (3) placed on a first end (4) of the case (1) for contacting with the batteries when they are in said housings (2); an opening (5) placed at a second end (6) opposite from the first end (4) for the insertion and removal of the batteries from the housings (2); at least one first magnet (7) placed at the first end (4) of the case (1) for detachably retaining the batteries inside the housings (2); and at least one second magnet (8) placed at the second end (6) of the case (1) for detachably attaching an adjacent case (1).

It permits to provide a case for batteries, that permit to detachably join two or more cases in a modular way, so that the storage and transportation of the batteries is enhanced.

## Description

### Field of the invention

The present invention relates to a case for batteries, comprising means for detachably attaching two or more cases to each other in a modular way.

### Background of the invention

Some activities require the use of a great number of batteries, that must be stored and transported to the site of use.

One of these activities is related with the audiovisual production, including the task of sound technician. This activity requires the use of batteries with the electrical devices usually used.

Due to the power that these electrical devices require, the batteries must be changed after a short period of time. Therefore, the person in charge must have access to a plurality of charged batteries.

In the market are available cases for batteries, comprising a plurality of housings, each housing a battery. One of the problems of these known cases is how to retain the batteries inside their housings permitting an easy insertion and removal.

To solve this problem, it is known the use of magnets for retaining the batteries inside the housings, so that the batteries can be removed from the case by hand pushing them against the force exerted by the magnets.

These cases can include several housings, such as four, six, twelve or even more, so that the user must have different cases with different capacities of batteries, and these cases do not comprise any attaching means for making them modular.

### Description of the invention

Therefore, an objective of the present invention is to provide a case for batteries, that permit to detachably join two or more cases in a modular way, so that the storage and transportation of the batteries is enhanced.

The case for batteries of the invention solves the above-mentioned disadvantages and has other advantages which will be described below.

The case for batteries according to the present invention is described in claim 1, and the dependent claims include additional features that are optional.

In particular, the case for batteries comprises:
- a plurality of housings for said batteries;
- a closed base placed on a first end of the case for contacting with the batteries when they are in said housings;
- an opening placed at a second end opposite from the first end for the insertion and removal of the batteries from the housings;
- at least one first magnet placed at the first end of the case for detachably retaining the batteries inside the housings; and
- at least one second magnet placed at the second end of the case for detachably attaching an adjacent case.

Thanks to the second magnet(s), the case according to the present invention can be detachably attached to one or more adjacent cases in a very simple way, forming a modular case assembly, permitting the storage and transportation of a great number of batteries in one single module.

Preferably, a plurality of second magnets is placed at the second end of the case, at opposite sides of the at least one opening.

Furthermore, a plurality of first magnets is preferably placed at the first end of the case, one first magnet for each housing.

For permitting the easy removal of the batteries, each housing comprises a pair of lateral windows, so that the batteries can be pushed through said lateral windows.

According to a preferred embodiment, each second magnet is placed at the second end between two adjacent housings.

### Brief description of the drawings

For a better understanding of what has been explained above, some drawings are included in which, schematically and only by way of a non-limiting example, a practical case of embodiment is represented.
Figure 1 is a frontal elevation view of the case for batteries according to the present invention;
Figure 2 is a side elevation view of the case for batteries according to the present invention;
Figure 3 is a side elevation view of two cases according to the present invention attached to each other; and
Figure 4 is a side elevation view of four cases according to the present invention attached to each other.

### Description of a preferred embodiment

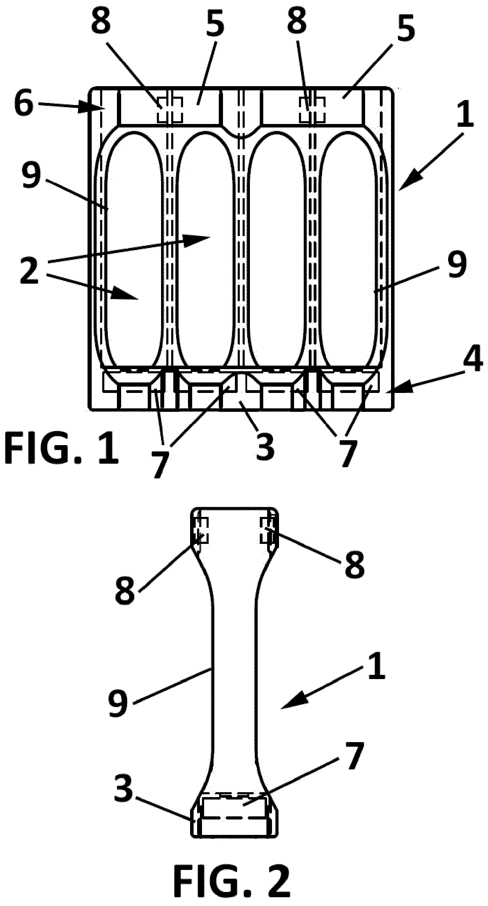

Figure 1 shows a frontal elevation view of the case (1) for batteries according to the present invention.

This case (1) comprises a plurality of housings (2) where one battery can be placed inside each housing (2).

The case (1) also comprises a closed base (3) placed on a first end (4) of the case (1), so that when a battery is placed inside a housing (2), the battery contacts this base (3).

At a second end (6) opposite from the first end (4) of the case (1) the is an opening (5) for the insertion and removal of the batteries from the housings (2).

The case (1) according to the present invention also comprises at least one first magnet (7) placed at the first end (4) of the case (1) for detachably retaining the batteries inside the housings (2).

Therefore, when a battery is inserted in any of the housings (2), the or one first magnet (7) retains the battery inside the housing (2).

According to the embodiment shown in Figs. 1 and 2, a plurality of first magnets (7) is placed at the first end (4) of the case (1), one first magnet (7) for each housing (2).

For removing the battery from the housing (2), each housing (2) comprises lateral windows (9), so that the user can push the battery with one finger to said opening (5), displacing the battery from the first magnet (7), so that the magnetic force does not act on the battery.

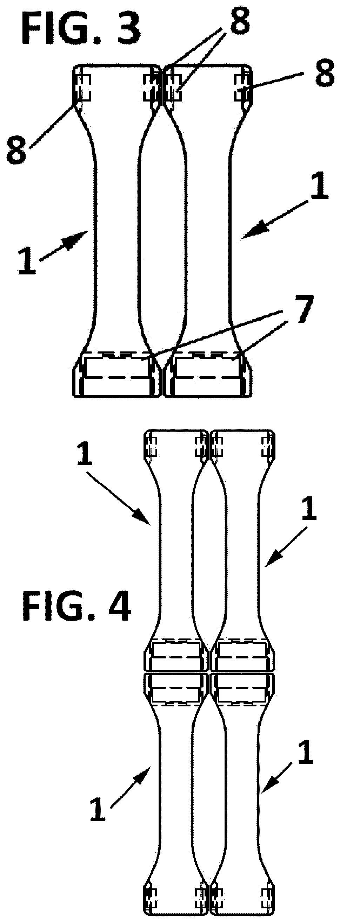

Furthermore, the case (1) according to the present invention also comprises at least one second magnet (8) placed at the second end (6) of the case (1). This at least one second magnet (8) is for detachably attaching an adjacent case (1), i.e. for making a module formed by two or more cases (1), as shown in Figs. 3 and 4.

According to the embodiment shown in Fig. 2, the case (1) comprises a plurality of second magnets (8) placed at the second end (6) of the case (1), at opposite sides of the at least one opening (5), so that an adjacent case (1) can be attached at each side of the case (1).

According to this embodiment, and as shown in Fig. 2, each second magnet (8) is placed at the second end (6) between two adjacent housings (2).

In Fig. 3 a module comprising two cases (1) is shown and in Fig. 4 a module comprising four cases (1) is shown. However, it must be pointed out that a module with any suitable number of cases (1) can be formed.

Furthermore, it must be clarified that the at least one magnet (7) is also used for detachably attaching an adjacent case (1), so that two adjacent cases (1) are attached by their bases (3).

Thanks to the presence of these magnets, two or more cases (1) can are attached to each other, forming a module that can be stored and transported easily, and that can be detached also easily when the user wants to remove and use the batteries.

Although reference has been made to a specific embodiment of the invention, it is obvious to a person skilled in the art that the case for batteries described is susceptible to numerous variations and modifications, and that all the details mentioned can be replaced by technically equivalent ones, without departing from the scope of protection defined by the appended claims.

## Claims

1. Case (1) for batteries, comprising:
- a plurality of housings (2) for said batteries;
- a closed base (3) placed on a first end (4) of the case (1) for contacting with the batteries when they are in said housings (2);
- an opening (5) placed at a second end (6) opposite from the first end (4) for the insertion and removal of the batteries from the housings (2); and
- at least one first magnet (7) placed at the first end (4) of the case (1) for detachably retaining the batteries inside the housings (2),
**characterized in that** the case (1) also comprises at least one second magnet (8) placed at the second end (6) of the case (1) for detachably attaching an adjacent case (1).

2. Case (1) for batteries according to claim 1, wherein a plurality of second magnets (8) is placed at the second end (6) of the case (1), at opposite sides of the at least one opening (5).

3. Case (1) for batteries according to claim 1 or 2, wherein a plurality of first magnets (7) is placed at the first end (4) of the case (1), one first magnet (7) for each housing (2).

4. Case (1) for batteries according to any one of the previous claims, wherein each housing (2) comprises a pair of lateral windows (9).

5. Case (1) for batteries according to claim 2, wherein each second magnet (8) is placed at the second end (6) between two adjacent housings (2).
